# EUROPEAN PATENT APPLICATION

(11) **EP 1 453 333 A1**
(43) Date of publication of application: **01.09.2004**
(21) Application number: 04002448.1
(22) Date of filing: 04.02.2004
(51) Int. Cl.: H04Q 7/32

(54) **Cellular phone, method and computer program product for network selection using history data**

(30) Priority: 26.02.2003 JP 2003048412
(71) Applicant: NEC CORPORATION, Tokyo (JP)
(72) Inventor: Iizuka, Masato, Tokyo (JP)
(74) Representative: Glawe, Delfs, Moll & Partner

(57) **Abstract**

A cellular phone (10) includes a plurality of wireless communication means (13, 14), a storage means (23), and a control means (20) for controlling the plurality of wireless communication means (13, 14) and the storage means (23). The plurality of wireless communication means (13, 14) are used for operating in a plurality of communication modes, respectively. The storage means (23) stores a history data (30) which indicates history of used communication modes. The control means (20) selects one communication mode from the plurality of communication modes based on the history data (30).

## Description

### Background of the Invention

### 1. Field of the Invention

The present invention relates to a cellular phone, a communication method and a communication program. In particular, the present invention relates to a communication method and a communication program using a cellular phone supporting a plurality of communication systems.

### 2. Description of the Related Art

A cellular phone supporting various communication systems is known. Such a cellular phone (multi-mode cellular phone) operates by using any one of communication systems such as PDC (Personal Digital Cellular), PHS (Personal Handyphone System), W-CDMA (Wideband-Code Division Multiple Access), GSM (Global System for Mobile Communications) and so on. The communication system used by the cellular phone is changed according to the situation.

According to such a cell phone, for example, a PDC system or a W-CDMA system is used at the time of voice communication, and PHS is used when connecting to the Internet and sending E-mails.

Japanese Laid Open Patent Application (JP-P2002-291016A) discloses a cellular phone which has a PHS wireless communication unit, a PDC wireless communication unit and a mode switching control unit. When the cellular phone moves in the service area of a PHS base station arranged in an office building, the cellular phone detects the PHS base station and the mode switching control unit selects a "PHS office mode" to communicate with the PHS base station. At that time, the power of the PDC wireless communication unit is turned off. In this cellular phone, the switching of the communication mode is carried out on the basis of the received signal level.

Japanese Laid Open Patent Application (JP-P-Heisei 7-298339) discloses a multi-mode cellular phone supporting a plurality of communication systems. The multi-mode cellular phone has a plurality of communication means for communicating with the plurality of communication systems, and a monitoring means for monitoring the signal level associated with each communication system. Based on the monitored signal level, the multi-mode cellular phone selects one of communication modes.

Japanese Laid Open Patent Application (JP-P2001-119753A) discloses a wireless mobile terminal which has a memory and a position detecting means for detecting the position of the wireless mobile terminal. The memory stores data which indicate service areas of a plurality of communication systems and a priority information. When the position is detected by the position detecting means, the wireless mobile terminal checks a list of communication systems available at that position based on the data stored in the memory. Then, one communication system is selected from the list on the basis of the priority information stored in the memory.

Japanese Laid Open Patent Application (JP-P2001-186279A) discloses a mobile communication terminal supporting voice communication mode and video telephone mode. In this mobile communication terminal, history of call/incoming call is displayed in a liquid crystal display with icons indicating the voice communication mode or the video telephone mode.

When the power of a multi-mode cellular phone is turned on or when a multi-mode cellular phone moves out of the service area of a communication system, it may be necessary to try several communication modes in order to establish communication with a base station. This causes the delay in searching the base station and hence the unnecessary power consumption.

### Summary of the Invention

Therefore, an object of the present invention is to provide a cellular phone and a communication method, in which the search for a base station to establish a communication is carried out efficiently.

Another object of the present invention is to provide a cellular phone and a communication method, which can reduce the power consumption.

In an aspect of the present invention, a cellular phone includes a plurality of wireless communication units (wireless communication means), a memory unit (a storage means), and a control unit (a control means) controlling the plurality of wireless communication units and the memory unit. The plurality of wireless communication units are used for operating in a plurality of communication modes, respectively. The memory unit stores a history data which indicates history of used communication modes. The control unit selects one communication mode from the plurality of communication modes based on the history data.

In the cellular phone according to the present invention, the control unit selects the above-mentioned one communication mode when power of the cellular phone is turned on. Here, the control unit selects the most frequently used communication mode as the one communication mode. The most frequently used communication mode is indicated by the history data.

Also, the control unit selects a second communication mode as the one communication mode when a first communication mode is unavailable. Here, the second communication mode has been used frequently next to the first communication mode, which is indicated by the history data. The control unit may select the second communication mode when the cellular phone moves out of service area of a communication system associated with the first communication mode.

In the cellular phone according to the present invention, the history data can indicate the used communication modes in order of use. Also, the history data can relate each of the used communication modes with the number of use. Moreover, the history data can relate each of the used communication modes with the rate of use.

As described above, the history data is stored in the memory unit (storage means), which indicates the frequency of use of each communication mode. The control unit (control means) determines a communication mode by referring to the history data. Therefore, the search for a base station to establish a communication is carried out efficiently. As a result, the power consumption is reduced and the battery lasts for a long time.

In another aspect of the present invention, a communication method by using the above-mentioned cellular phone includes (a) storing a history data indicating history of used communication modes in a memory; and (b) selecting one communication mode from the plurality of communication modes based on the history data.

The communication method further includes (c) updating the history data after establishing a communication with the one communication mode.

In the communication method according to the present invention, the above-mentioned (b) selecting includes (b-1) selecting the most frequently used communication mode as the one communication mode. Also, the above-mentioned (b) selecting includes (b-2) selecting a second communication mode as the one communication mode when a first communication mode is unavailable. Here, the second communication mode has been used frequently next to the first communication mode, which is indicated by the history data.

In still another aspect of the present invention, the communication method is executed by a computer program product which is embodied on a computer-readable medium of the above-mentioned cellular phone. The computer program product includes code that, when executed, causes a computer to perform: (a) storing a history data indicating history of used communication modes in a memory; and (b) selecting one communication mode from the plurality of communication modes based on the history data.

The computer program product can further include code that, when executed, causes a computer to perform (c) updating the history data after establishing a communication with the one communication mode.

In the computer program product according to the present invention, the above-mentioned (b) selecting includes (b-1) selecting the most frequently used communication mode as the one communication mode. Also, the above-mentioned (b) selecting includes (b-2) selecting a second communication mode as the one communication mode when a first communication mode is unavailable. Here, the second communication mode has been used frequently next to the first communication mode, which is indicated by the history data.

Thus, the search for a base station to establish a communication is carried out efficiently. As a result, the power consumption is reduced and the battery lasts for a long time.

### Brief Description of the Drawings

Fig. 1 is a schematic picture showing operation of a cellular phone according to the present invention;
Fig. 2 is a block diagram showing a configuration of the cellular phone according to the present invention;
Fig. 3 shows an example of contents of history data stored in the cellular phone according to the present invention;
Fig. 4 shows another example of contents of history data stored in the cellular phone according to the present invention; and
Fig. 5 is a flowchart showing communication method by using the cellular phone according to the present invention.

### Description of the Preferred Embodiments

Embodiments of the present invention will be described below with reference to the attached drawings.

A cellular phone according to the present invention supports various communication systems. That is, the cellular phone in the present invention is able to operate by using any one of communication systems such as PDC (Personal Digital Cellular), PHS (Personal Handyphone System), W-CDMA (Wideband-Code Division Multiple Access), GSM (Global System for Mobile Communications) and so on. Also, the cellular phone is able to operate in various frequency bands. For example, the cellular phone operates in any of the 800 MHz and 1.5 GHz bands. The communication system or the communication frequency band used by the cellular phone is switched according to the situation.

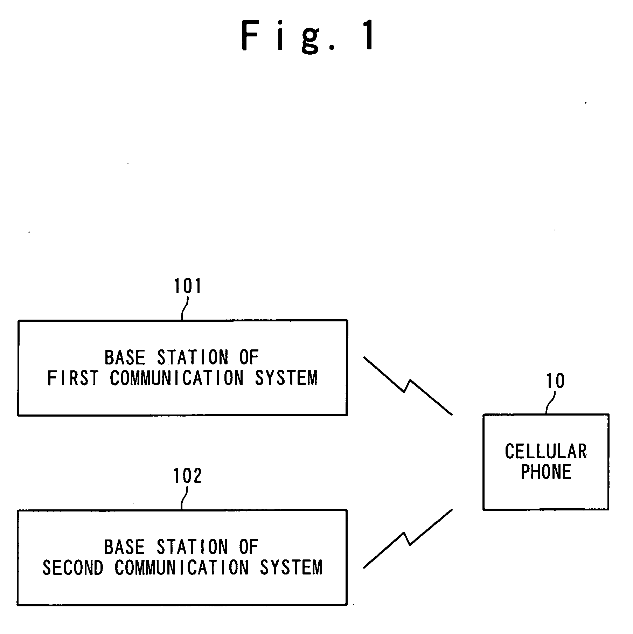

Fig. 1 is a schematic picture showing the above-mentioned operation of the cellular phone according to the present invention. As shown in Fig. 1, the cellular phone 10 can communicate with any one of a base station of a first communication system 101 and a base station of a second communication system 102. The base station of the first communication system 101 belongs to a network of one of the communication systems such as PDC, PHS, W-CDMA, GSM and the like. The base station of the second communication system 102 belongs to a network of another communication system.

The cellular phone 10 operates in a first communication mode when communicating with the base station of the first communication system 101. The cellular phone 10 operates in a second communication mode when communicating with the base station of the second communication system 102. The communication mode used by the cellular phone 10 is switched according to the situation. It should be noted that the number of the communication systems supported by the cellular phone 10 is not limited to 2.

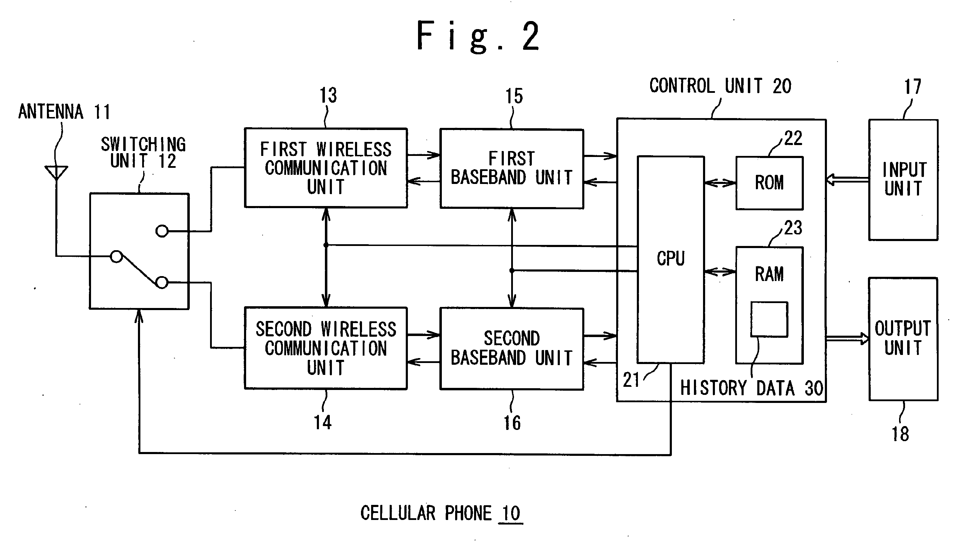

Fig. 2 is a block diagram showing a configuration of a cellular phone according to an embodiment of the present invention. As shown in Fig. 2, the cellular phone 10 according to the embodiment of the present invention has an antenna 11, a switching unit 12, a plurality of wireless communication units (13, 14), a plurality of baseband units (15, 16), an input unit 17, an output unit 18, and an control unit 20 controlling the above-mentioned units.

The plurality of wireless communication units include at least a first wireless communication unit 13 and a second wireless communication unit 14. The plurality of baseband units include at least a first baseband unit 15 and a second baseband unit 16, which are connected to the first wireless communication unit 13 and the second wireless communication unit 14, respectively. Each wireless communication unit (13, 14) transmits and receives radio waves through the antenna 11. Each baseband unit (15, 16) processes digital data between the control unit 20 and the corresponding one of the wireless communication units (13, 14).

The first wireless communication unit 13 and the first baseband unit 15 are used for communicating with the base station of the first communication system 101 shown in Fig. 1. In that case, the cellular phone 10 operates in a first communication mode adapted to the first communication system 101. The second wireless communication unit 14 and the second baseband unit 16 are used for communicating with the base station of the second communication system 102 shown in Fig. 1. In that case, the cellular phone 10 operates in a second communication mode adapted to the second communication system 102.

Or, the first wireless communication unit 13 and the second wireless communication unit 14 may transmit and receive radio waves of different frequencies. For example, the first and the second wireless communication unit 13 and 14 are associated with 800 MHz and 1.5 GHz bands, respectively.

The switching unit 12 switches between the plurality of wireless communication units. That is to say, a communication mode in which the cellular phone 10 operates is selected by the switching unit 12. The switching unit 12 is controlled by the control unit 20, as described below.

The input unit 17 includes a microphone and a plurality of buttons, with which a user can input various data to the cellular phone 10. The output unit 18 includes a speaker and a display such as an LCD (Liquid Crystal Display), which notify the user of various information.

The control unit 20 has a CPU (Central Processing Unit) 21, a ROM (Read Only Memory) 22, and a RAM (Random Access Memory) 23. The CPU 21 processes various data to control the switching unit 12, the plurality of wireless communication units (13, 14), the plurality of baseband units (15, 16), and the output unit 18. The ROM 22 stores a plurality of computer programs executed by the CPU 21. The RAM (memory unit) 23 is used as a working memory during processes by the CPU 21. A non-volatile memory such as a flash memory may be used as the RAM 23.

In the present invention, history data 30 is stored in the RAM 23, as shown in Fig. 2. The history data 30 indicates communication systems with which the cellular phone 10 has communicated in the past. That is to say, the history data 30 indicates the history of the used communication mode.

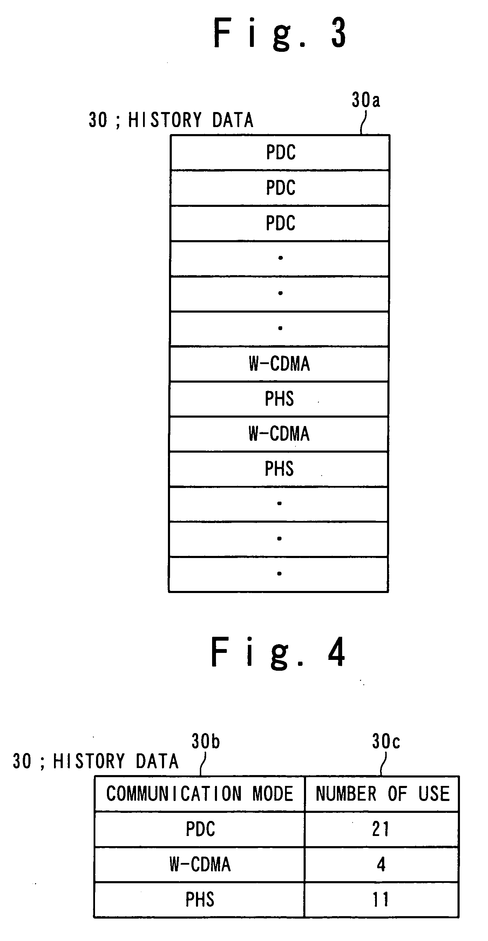

Fig. 3 shows an example of contents of the history data 30 stored in the RAM 23. The history data 30 has several storage blocks 30a. Each storage block 30a contains data which indicates a communication mode used in the past. For example, the top storage block 30a contains data "PDC", which means that the cellular phone 10 has operated in the PDC communication mode. Similarly, data "W-CDMA" and data "PHS" in one storage block 30a indicate the used communication modes applied to W-CDMA and PHS, respectively. Each data ("PDC", "W-CDMA", "PHS" and the like) is referred to as mode data, hereinafter. As shown in Fig. 3, the history data 30 stores a plurality of mode data arranged in order of use. That is to say, the history data 30 is log data showing the history of communication modes.

Fig. 4 shows another example of contents of the history data 30 stored in the RAM 23. The history data 30 has a column 30b ("Communication Mode") and a column 30c ("Number of Use"). Indicated in the column 30b is mode data such as "PDC", "W-CDMA", "PHS" and so on. Indicated in the column 30c is how many times the corresponding communication mode is used in the past. For example, the history data 30 indicates that the cellular phone 10 has operated in the PDC communication mode 21 times in the past. Similarly, the history data 30 indicates that the cellular phone 10 has operated in the W-CDMA and PHS modes 4 and 11 times in the past, respectively. As explained above, the history data 30 relates the communication mode with the number of use. That is to say, the history data 30 indicates the frequency of use of each communication mode. Every time communication with a communication system is established, the number shown in the corresponding storage block in the column 30c increases. It should be noted that the column 30c may indicate the "Rate of Use". In this case, the data in the column 30c is shown in percentage.

The data in the column 30a or the column 30b may indicate the communication radio frequency. For example, the data may indicate that the cellular phone 10 has operated in the 800 MHz bands or in the 1.5 GHz bands.

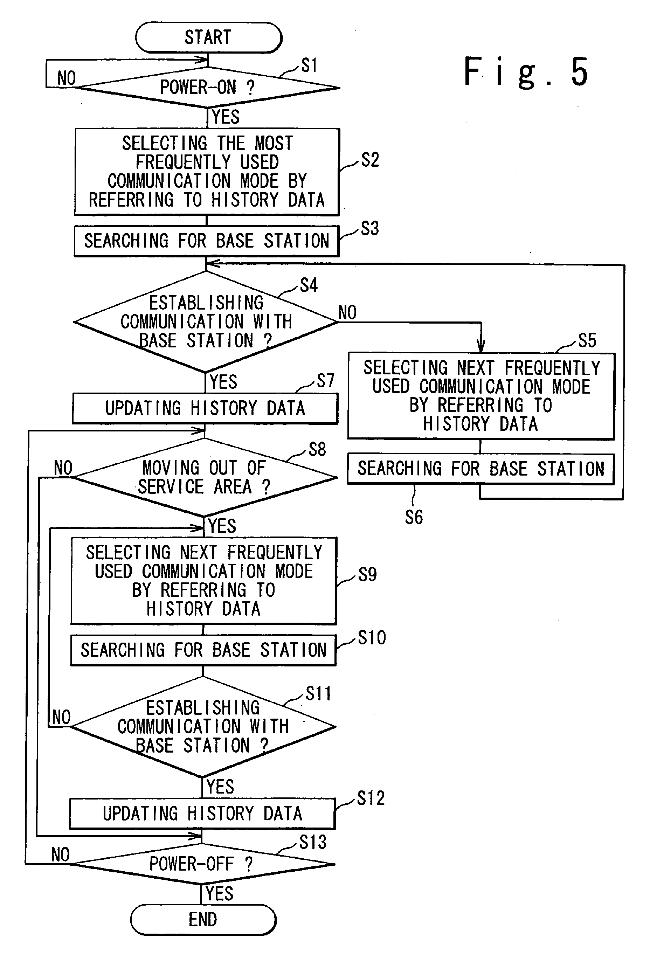

Fig. 5 is a flowchart showing the communication method by using the cellular phone 10 according to the present invention.

When the power is turned on (Step S1; Yes), the CPU 21 selects the most frequently used communication mode by referring to the history data 30 stored in the RAM 23 (see Fig. 3 and Fig. 4). The selected communication mode is used as a start-up communication mode (Step S2).

Then, the CPU 21 searches for a base station of a communication system (see Fig. 1) corresponding to the selected communication mode. That is to say, the CPU 21 (the cellular phone 10) tries to establish communication with a base station by using the selected communication mode (Step S3).

If the communication with a base station is not established (Step S4; No), the CPU 21 selects the next frequently used communication mode by referring to the history data 30 stored in the RAM 23 (Step S5). That is to say, when a communication mode is unavailable, the CPU 21 selects another communication mode which is used frequently next to the communication mode.

Then, the CPU 21 searches for a base station of a communication system corresponding to the selected communication mode (Step S6). Thus, the cellular phone 10 according to the present invention tries to establish communication with a communication system sequentially based on the history data 30.

When the communication is established by using a communication mode (Step S4; Yes), the CPU 21 updates the history data 30 by adding information about the currently-used communication mode (Step S7).

When the cellular phone 10 according to the present invention moves out of the service area of the communication system which has been used up to that time (Step S8; Yes), the CPU 21 selects the next frequently used communication mode by referring to the history data 30 stored in the RAM 23 (Step S9). That is to say, when a communication mode is unavailable, the CPU 21 selects another communication mode which is used frequently next to the communication mode.

Then, the CPU 21 searches for a base station of a communication system corresponding to the selected communication mode (Step S10). Thus, the cellular phone 10 according to the present invention tries to establish communication with a communication system sequentially based on the history data 30.

If the communication with a base station is not established (Step S11; No), the CPU 21 selects the next frequently used communication mode again by referring to the history data 30 (Step S9). If the communication is established by using a communication mode (Step S11; Yes), the CPU 21 updates the history data 30 by adding information about the currently-used communication mode (Step S12).

In the present invention, the procedures from the Step S8 to the Step 12 are carried out repeatedly until the power is turned off (Step S13). When the power is turned on after the power is turned off (Step S13), the procedures mentioned above start all over again.

The above-mentioned procedures are carried out by the CPU 21 with computer programs (communication program). Such computer programs are stored in the ROM 22 of the control unit 20.

As described above, the history data 30 is stored in the RAM 23, which indicates the frequency of use of each communication mode. The CPU 21 determines a communication mode by referring to the history data 30. More specifically, the CPU 21 selects the frequently used communication mode preferentially. Moreover, the history data 30 is updated every time a communication is established. Therefore, the search for a base station to establish a communication is carried out efficiently. As a result, the power consumption is reduced and the battery lasts for a long time.

It should be noted that it is also possible to select and start an application stored in the ROM 22 on the basis of the above-mentioned history data 30. Also, it is also possible to change the setting of the application on the basis of the above-mentioned history data 30.

It will be obvious to one skilled in the art that the present invention may be practiced in other embodiments that depart from the above-described specific details. The scope of the present invention, therefore, should be determined by the following claims.

## Claims

1. A cellular phone (10) comprising:
a plurality of wireless communication means (13, 14) used for operating in a plurality of communication modes, respectively;
a storage means (23) for storing a history data (30) which indicates history of used communication modes; and
a control means (20) for controlling said plurality of wireless communication means (13, 14) and said storage means (23),
wherein said control means (20) selects one communication mode from said plurality of communication modes based on said history data (30).

2. The cellular phone (10) according to claim 1, wherein said control means (20) selects a most frequently used communication mode as said one communication mode.

3. The cellular phone (10) according to claim 1, wherein said control means (20) selects a second communication mode as said one communication mode when a first communication mode is unavailable, said second communication mode being used frequently next to said first communication mode.

4. The cellular phone (10) according to claim 1 or 2, wherein said control means (20) selects said one communication mode when power of said cellular phone is turned on.

5. The cellular phone (10) according to claim 3, wherein said control means (20) selects said second communication mode when said cellular phone (10) moves out of service area of a communication system associated with said first communication mode.

6. The cellular phone (10) according to any of claims 1 to 5, wherein said history data (30) indicates said used communication modes in order of use.

7. The cellular phone (10) according to any of claims 1 to 5, wherein said history data (30) relates each of said used communication modes with number of use.

8. The cellular phone (10) according to any of claims 1 to 5, wherein said history data (30) relates each of said used communication modes with rate of use.

9. A communication method by using a cellular phone (10) supporting a plurality of communication modes, comprising:
(a) storing a history data (30) indicating history of used communication modes in a memory (23); and
(b) selecting one communication mode from said plurality of communication modes based on said history data (30).

10. The communication method according to claim 9 further comprising (c) updating said history data (30) after establishing a communication with said one communication mode.

11. The communication method according to claim 9 or 10, wherein said (b) selecting includes (b-1) selecting a most frequently used communication mode as said one communication mode.

12. The communication method according to any of claims 9 to 11, wherein said (b) selecting includes (b-2) selecting a second communication mode as said one communication mode when a first communication mode is unavailable, said second communication mode being used frequently next to said first communication mode.

13. Computer program product with program code means according to any of claims 9 to 12 which are stored on a storage means which can be read by the computer.
